# EUROPEAN PATENT SPECIFICATION

(11) **EP 3 023 529 B1**
(45) Date of publication and mention of the grant of the patent: **25.09.2019**
(21) Application number: 13889389.6
(22) Date of filing: 18.12.2013
(51) Int. Cl.: D06F 39/00, D06F 33/02, C02F 1/00, C02F 103/00, D06F 39/08, D06F 39/10

(54) **WASHING CONTROL METHOD FOR THE PURIFICATION OF THE CIRCULATING WATER OF A WASHING MACHINE AND WASHING MACHINE**
WASCHSTEUERUNGSVERFAHREN ZUR REINIGUNG DES ZIRKULIERENDEN WASSERS EINER WASCHMASCHINE UND WASCHMASCHINE
PROCÉDÉ DE COMMANDE DE PURIFICATION DE L'EAU DE CIRCULATION D'UNE MACHINE À LAVER ET MACHINE À LAVER

(30) Priority: 19.07.2013 CN 201310305616
(43) Date of publication of application: 25.05.2016
(73) Proprietor: Haier Group Corporation, Qingdao, Shandong 266101 (CN); Hefei Haier Washing Machine Co., Ltd., Hefei Anhui 230031 (CN)
(72) Inventor: XU, Sheng, Qingdao Shandong 266101 (CN); HUANG, Zhenxing, Qingdao Shandong 266101 (CN); CHEN, Yuling, Qingdao Shandong 266101 (CN)
(74) Representative: Ziebig, Marlene
(86) International application number: PCT/CN2013/089813
(87) International publication number: WO 2015/007057

(56) References cited:
- CN-Y- 201 258 402
- JP-A- 2001 286 698
- KR-A- 20030 044 491
- US-A1- 2005 252 255
- US-A1- 2010 223 738

## Description

### BACKGROUND

### Technical Field

The invention relates to the field of washing machines, specifically to a washing machine for circulating water purification, particularly to a washing control method for circulating water purification of a washing machine and a washing machine thereof.

### Related Art

Along with growth in the living standard of people, the washing machine has become one of main household appliances of daily life of people, a washing process of the washing machine mainly comprises plural stages of washing, rinsing and spin-drying, water and a detergent enter the washing machine in the washing stage to wash clothes, after entering the rinsing stage, in order to cleanly rinse besmirch and residual detergent, more water or more rinsing times are executed to rinse the clothes which certainly will consume massive water resources, even for a roller washing machine saving water, at least two times of rinsing are required to cleanly rinsing the clothes, and this process at least consumes more than 30L of tap water. Sometimes if the besmirch on the clothes or charged detergent is less, the clothes may be only need to be rinsed twice, but since a user selects rinsing for three times, which certainly will waste the water resources, for example, the basic water consumption of a full-automatic washing machine of 6Kg for rinsing twice is generally about 100L. How to save water and electricity while the clothes are cleanly washed is one of attentions of consumers. At present, there is no water purification and recycle device mated with the domestic washing machine, even if for the washing machine with a water saving function, generally, a water storage tank is arranged at the side position of the washing machine, a water pump is adopted for injecting and discharging water, and in common, water injection once can be used for rinsing for third times to achieve the water-saving function. Washed water cannot not be reserved, and the washing machine is unfavorable for transportation, recycle and the like due to a complex and huge structure. Original functions of the washing machine and functions of a water saving box are influenced due to limitations of size, structure, flexibility and the like. Based on the existing clothes washing manenr, many plants invest a lot into research and development in order to better save water resources.

About recycle of the washed water, through looking up related patent documents, for example "a water saving device for recycled water of a washing machine" with the application number CN200810072420A is characterized in that the washed water is supplied into a bucket to be purified. In above invention, the washed water for the first time is not purified and is directly discharged, and the rinsed water for the second and third times is purified and then reserved for the next use of the washing machine.

JP 2001 286698 A describes a washing machine with execution of a turbidity-reducing water purification cycle based on preset turbidity value.

US 2005/252255 A1 discloses a method and system for washing, in which water softening is mainly described.

In above technologies, in "a water recycling technology", the rinsed water is purified and then rinsed, the washed water (primary washed water) for the first time cannot be circularly used, and the purified water needs to be reserved for the washing the next time and cannot be used at the present washing time.

Considering this, the invention is provided.

### SUMMARY

The invention aims to overcome the deficiencies in the prior art, and provides a water-saving time-saving washing control method for circulating water purification of a washing machine.

Another aim of the invention is to provide a water-saving time-saving washing machine.

In order to solve above problems, a basic concept of technical solutions of the invention is a washing control method for circulating water purification of a washing machine, wherein the washing machine comprises a water supplying system, a water discharging system, a circulating water purification device and a turbidity detector, in a rinsing process, circulating water purification rinsing is executed by the circulating water purification device, turbidity of washed water is detected according to the turbidity detector, and after preset displacement - in other words a preset water discharge amount - corresponding to the turbidity is selected for discharging water and the amount is discharged, the circulating water purification rinsing is executed after supplying clean water for reducing the turbidity.

Further, the washing machine is provided with different washed water turbidity ranges, corresponding turbidity ranges are judged according to the detected washed water turbidities, and displacements of different proportions of total washed water are arranged corresponding to respective turbidity ranges.

Further, after water discharging is finished according to the displacement corresponding to the detected washed water turbidity, clean water is supplied to a set rinsing water level for reexecuting the circular water rinsing.

Further, after washing is finished, if the washed water turbidity detected by the turbidity detector is smaller than a set first turbidity threshold valve, the circulating water purification device is directly opened for circulating water purification; if the turbidity is larger than a set second turbidity threshold value, the washed water is totally discharged, water is supplied again for rinsing, and circulating water purification is executed; if the turbidity is in an interval between the first turbidity threshold value and the second turbidity threshold value, water of corresponding displacement is discharged according to the detected washed water turbidity, rest washed water is reserved, and clean water is supplied to reduce the turbidity and then circulating water purification rinsing is executed.

Or, an alternative solution of above solution is that after washing is finished, the turbidity detector detects the washed water turbidity, if the turbidity is smaller than the set first turbidity threshold value, the circulating water purification device is directly opened for circulating water purification; if the turbidity is larger than the set first turbidity threshold value, water of the corresponding displacement is discharged according to the detected washed water turbidity, and clean water is supplied for executing the circulating water purification rinsing.

Further, in the circulating water purification rinsing process, time is set at intervals to detect the rinsed water turbidity, if the rinsed water turbidity is smaller than a set third turbidity threshold value, the rinsing is finished, the rinsing is stopped and the water circular purification device is closed.

Or, an alternative solution of above solution is that in the circular water rinsing process, if working time of the circulating water purification device reaches the set working time, the rinsing is finished, the rinsing is stopped and the water circular purification device is closed.

Further, the set working time of the circulating water purification device judging the ending of the rinsing is related to a selected washing procedure, and different washing procedures correspond to different set working time.

Through reducing the turbidity by water discharging and supplying, the circulating water purification device easily realizes water purification, time for circular water supplying rinsing is relatively reduced, but for clothes with larger water absorption, such as cotton or large-piece clothes, after long time of clean water for rinsing, turbid water adsorbed in the clothes is still released, causing a result that the rinsing is unclean in set time or the rinsing time is overlong. In order to prevent the condition, further, in the circulating water purification rinsing process, when rinsing to set time, whether the rinsed water turbidity is increased continuously in the set time range is detected, if yes, part or all water is discharged for clean water rinsing according to a change rate of the turbidity; and if no, circulating water purification rinsing continues till the rinsing is ended.

Further, the preset time relates to clothes amount and a rinsing water level.

Further, the preset displacement - in other words the preset water discharge amount - corresponding to the washed water turbidity is set according to a proportion of washed water volume, a ratio is larger than 0 and smaller than 1, and at least one ratio exists and is related to quantity set and washing procedures. For example, for the cotton or large-piece clothes, three ratios are set according to the turbidities in three different ranges, for example, washed water volume of 1/3 is discharged if the corresponding turbidity is (600, 700]NTU, washed water volume of 1/2 is discharged if the corresponding turbidity is (700, 800]NTU, and washed water volume of 2/3 is discharged if the corresponding turbidity is (800, 900]NTU; for less clothes or Dacron clothes, only one ratio is required, for example, washed water volume of 1/2 is discharged if the corresponding turbidity is 700-800NTU. Above values are not fixed and are only one of the manners.

The washing machine comprises a water bucket, a circulating water purification passage and a backflushing passage; the circulating water purification passage is a circular passage consisting of the water bucket, the water discharging system, the circulating water purification device and the water supplying system in sequence, and the backflushing passage consists of the water supplying system, the circulating water purification device and the water discharging system.

The circulating water purification device comprises a circular water purifier, containing a filter purification module such as activated carbon and an RO membrane, which can purify the circular water flowing by the circulating water purification device; and the backflushing system can wash off filtered and purified besmirch in the circulating water purification device.

After above technical solutions are adopted, the invention has following beneficial effects.

According to the washing machine, after washing is finished, the turbidity detector can automatically detect washed water turbidity, and judge whether to discharge washed water and a discharging ratio, then enough tap water is supplied to reduce the washed water turbidity to a range suitable for purification, the circulating water purification device is started for rinsing, the water resources are furthest saved while the purification efficiency is not affected, and by a solution, of discharging partial water and then supplying clean water to reduce the turbidity, which saves more time than the solution of purifying all washed water with higher turbidity, the aims of instant stopping after clean washing and saving time and water are achieved.

### BRIEF DESCRIPTION OF THE DRAWINGS

FIG. 1 is a structural schematic diagram of a washing machine according to the invention;
FIG. 2 is a washing flow schematic diagram of a washing machine according to the invention;
FIG. 3 is a schematic diagram of a circulating water purification rinsing flow of a washing machine according to the invention,
wherein, 1, box body, 2, outer drum. 3, inner drum, 4 water supplying system, 41, first water inlet valve, 42, second water inlet valve, 43, third water inlet valve, 44, first water inlet pipe, 45, second water inlet pipe, 46, third water inlet pipe, 47, detergent box, 48, fourth water inlet pipe, 5, computer panel controller, 6, door cover, 7 water discharging system, 71, water discharging hose, 72, draining pump, 73, first water discharging pipe, 74, second water discharging pipe, 8, circulating water purification device, 81, circulating water purification device, 82, fixing device, 83, tee pipe, 84, first electric tee ball valve, 85 backflushing water discharging valve, 86, first circulating pipe, 87, second electric tee ball valve, 88, second circulating pipe, 89, sprayer, 9, motor drive device, 10, turbidity detector, 11 water level detector.

### DETAILED DESCRIPTION

Specific embodiments of the invention are further described in combination with the accompanying drawings.

### Embodiment 1

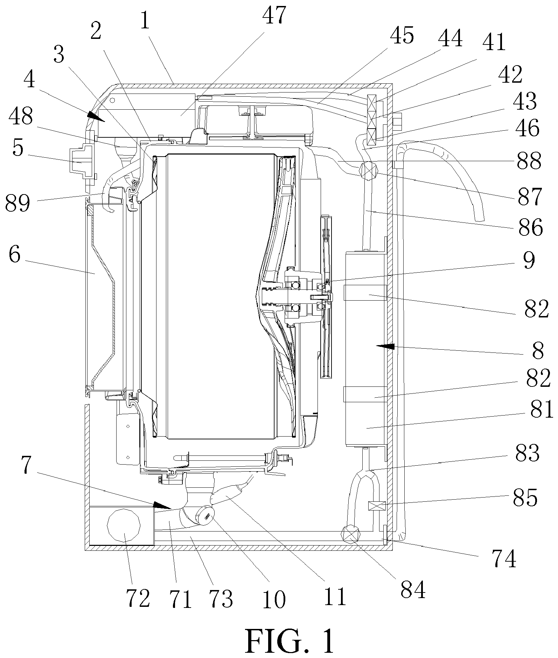

As shown in FIG. 1, the washing machine comprises a box body 1, an outer drum 2, an inner drum 3, a water supplying system 4, a computer panel controller 5, a circulating water purification device 8, and a motor drive device 9. The water supplying system 4 comprises a first water inlet valve 41, a second water inlet valve 42, a third water inlet valve 43, a first water inlet pipe 44, a second water inlet pipe 45, a third water inlet pipe 46, a detergent box 47 and a fourth water inlet pipe 48. The first water inlet valve 41 is communicated with the detergent box 47 by the first water inlet pipe 44, and the detergent box 47 is communicated with the outer drum 2 by the fourth water inlet pipe 48, thus forming a pre-water inlet passage of washed water. The second water inlet valve 42 is communicated with the detergent box 47 by the second water inlet pipe 45, and the detergent box 47 is communicated with the outer drum 2 by the fourth water inlet pipe 48, thus forming a main water inlet passage of the washed water. The third water inlet valve 43 is communicated with a second electric tee ball valve 87 by the third water inlet pipe 46, thus forming a backflushing passage of the circulating water purification device 8. The water discharging system 4 comprises a water discharging hose 71, a draining pump, a first water discharging pipe 73 and a second water discharging pipe 74. The water discharging hose 71 is provided with a turbidity detector 10 and a water level detection detector 11, which are respectively used for detecting washed water turbidity and a water level in the outer drum. The first water discharging pipe 73 is communicated with the second water discharging pipe 74 by a first electric tee ball valve and a tee pipe 83, and the second water discharging pipe is communicated with the tee pipe 83 by a backflushing water discharging valve 85. The circulating water purification device 8 comprises a circular water purifier 81, a fixing device 82, the tee pipe 83, the first electric tee ball valve 82, the backflushing water discharging valve 85, a first circulating pipe 86, a second electric tee ball valve 87, a second circulating pipe 88 and a sprayer 89. The circular water purifier 81 is fixed on the box body 1 by the fixing device 82, and the circular water purifier contains filter purification modules such as activated carbon and an RO membrane, which can purify circular water flowing by the water purifier.

The outer drum 2, the water discharging hose 71, a draining pump 72, the first water discharging pipe 73, the first electric tee ball valve 84, the tee pipe 83, the circular water purifier 81, the first circulating pipe 86, the second electric tee ball valve 87, the second circulating pipe 88 and the sprayer 89 form the circulating water purification passage in sequence.

The water inlet valve 43, the third water inlet pipe 46, the second electric tee ball valve 87, the first circulating pipe 86, the circular water purifier 81, the tee pipe 83, the backflushing water discharging valve 85 and the second water discharging pipe 74 form the water backflushing passage in sequence, and besmirch collected by the circular water purifier is washed by tap water and discharged out of the washing machine for facilitating the circular washed water purification next time.

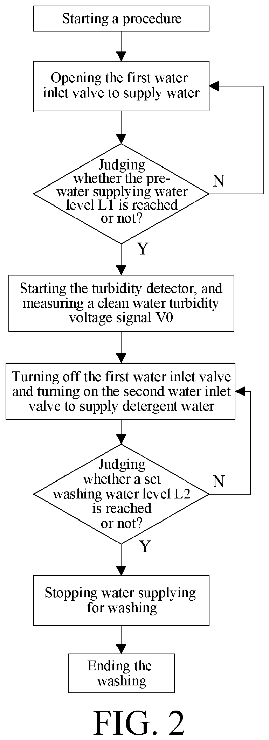

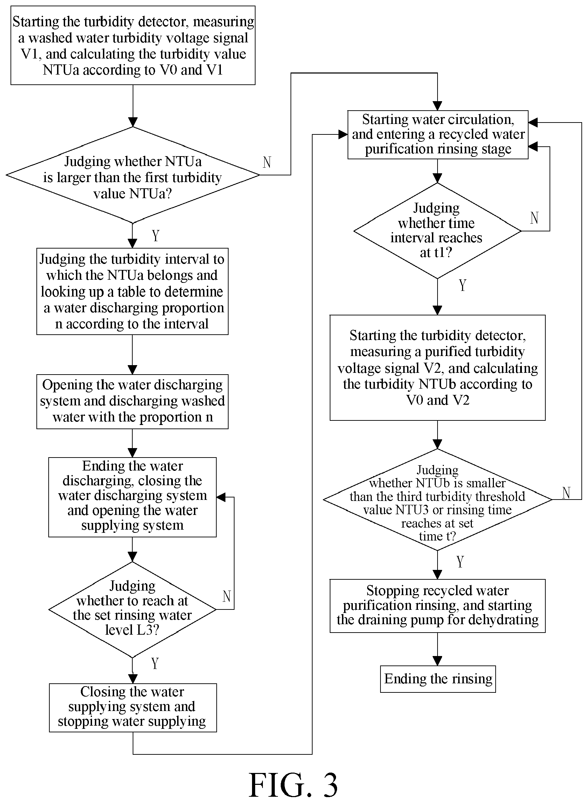

As shown in FIG. 2 and FIG. 3, during clothes washing, after a user starts a procedure, a computer panel controller of the washing machine turns on the first water inlet valve 41 for supply water in advance, clean tap water enters the outer drum 2 by the first water inlet pipe 44, the detergent box 47 and the fourth water inlet pipe 48 in sequence and the water discharging hose 71 is preferably filled with water. When the water level detector 11 detects the supplied water arrives at a pre-water supplying water level LI, the turbidity detector 10 is started to detect a turbidity voltage signal V0 of the clean water. Then the first water inlet valve 41 is turned off, the second water inlet valve 42 is turned on, and tap water carries the water containing detergent into the outer drum 2 by the second water inlet pipe 45, the detergent box 47 and the fourth water inlet pipe 48 in sequence. After a washing set water level L2 is reached, the second water inlet valve 42 is turned off to stop water supplying and enter a washing stage.

After the washing is finished, the turbidity detector is started to detect a washed water turbidity voltage signal V1, and a washed turbidity valve NTUa is calculated according to V0, V1 and a turbidity calculation formula. Whether the NTUa is larger than a set first turbidity threshold value NTU1 (for example 600NTU) is judged, if no, circulating water purification rinsing is directly executed; and if yes, it indicates that the washed water turbidity is overhigh, and unsuitable for direct recycle and purification, an interval to which the turbidity belongs is further judged, water of certain proportion is discharged through looking up a table according to the interval, and a corresponding relation between the proportion n of the discharged water accounting for the total washed water and the turbidity intervals sees following table:

| Turbidity intervals (NTU) | Water discharging proportions n |
|---|---|
| (600, 700] | 1/3 |
| (700, 800] | 1/2 |
| (800, 900) | 2/3 |
| More than 900 | 1 |

A process of reducing the turbidity through discharging and supplying water comprises: rotating the first electric tee ball valve 84 to a state of communicating the first water discharging pipe 73 and the second water discharging pipe 74 and directly turning on the draining pump 72 to execute a water discharging process, after reaching at the water level with the water discharging proportion n, turning off the draining pump 72 and turning on the second water inlet valve 42 to supply tap water; supplying the tap water to a set rinsing water level L3, rotating the first electric tee ball valve 84 to the state of communicating the first water discharging pipe 73 and the tee pipe 83, rotating the second electric tee valve 87 to the state of communicating the first circulating pipe 86 and the second circulating pipe 88, then starting the draining pump to recycle and purify the washed water with the reduced turbidity and rinsing, wherein in a circulating water purification process, a turbidity voltage signal V2 is detected every time t1, and a washed water turbidity valve NTUb is calculated according to V0, V2 and a turbidity calculation formula, if the NTUb is smaller than a third turbidity threshold valve NTU3 through detection, and NTU3 is smaller than NTU1, it indicates that the rinsing water is lower in turbidity and the clothes are cleanly rinsed, otherwise, circulating water purification rinsing continues, when the NTUb is smaller than the set third turbidity threshold value NTU3 or the total recycling purification time reaches at t2, circulating water purification is stopped, and the first electric tee ball valve is rotated to the state of communicating the first water discharging pipe 73 and the second water discharging pipe 74 to execute the water discharging and dehydrating process;
after dehydrating is finished, keeping the draining pump 72 in a working state, executing a shaking procedure of the roller (loosening the clothes to prevent wrinkles) while rotating the second electric tee ball valve 87 to the state of communicating the third water inlet pipe 46 and the first circulating pipe 86, rotating the first electric tee ball valve 84 to the state of communicating the first water discharging pipe 73 and the second water discharging pipe 74, turning on the backflushing water discharging valve 85 and the third water inlet valve 43, backflushing the circular water purifier 81 with clean tap water, wherein the cleaned sewage is discharged under the pressure of the tap water and the action of the draining pump; and when the backfluhsing time reaches at t3, turning off the third water inlet valve 43 and the backflushing water discharging valve 85, closing the draining pump 72 after discharging water for 10s, thus ending the washing.

### Embodiment 2

The difference between the present embodiment and embodiment 1 is that the washing machine is also provided with a second turbidity threshold value, after washing is finished, the turbidity detector 10 is started to detect a washed water turbidity voltage signal V1, and the washed water turbidity value NTUa is calculated according to V0, V1 and a turbidity calculation formula. Whether the NTUa is smaller than the set first turbidity threshold valve NTU1 (for example 600NTU) is judged, if yes, it indicates that the washed water turbidity is not high, and suitable for direct recycling and purification, if no, whether the NTUa is larger than the set second turbidity threshold value NTU2 (for example 900NTU) and whether NTU1 is smaller than NTU2 are judged, if yes, it indicates that the washed water turbidity is overhigh and unsuitable for recycling and purification, water is discharged and clean water is resupplied to execute the circulating water purification rinsing, if no, the turbidity interval to which the NTUa belongs is judged, certain of proportion of water is correspondingly discharged according to the interval, the proportion of discharged water accounting for total washed water is n, and n is larger than 0 and smaller than 1, for example, a corresponding relation between the set turbidity threshold values and intervals and the water discharging proportion n sees the following table:

| Turbidity intervals (NTU) | Water discharging proportions n |
|---|---|
| (600, 700] | 1/3 |
| (700, 800] | 1/2 |
| (800, 900) | 2/3 |

### Embodiment 3

The difference between the present embodiment and embodiment 1 is that the washing machine is not provided with a first turbidity threshold value, discharged water accounting for the total washed water is n, n is larger than or equal to 0 and smaller than equal to 0, the first turbidity threshold value NTU1 set in the embodiment 1 is set as an interval corresponding to the water discharging proportion as 0 in the present embodiment, the second turbidity threshold value NTU2 set in the embodiment 1 is set as an interval corresponding to the water discharging proportion as 1 in the present embodiment, and a specifically set corresponding relation between the turbidity intervals and the water discharging proportions sees following table:

| Turbidity intervals (NTU) | Water discharging proportions n |
|---|---|
| Less than 600 | 0 |
| (600, 700] | 1/3 |
| (700, 800] | 1/2 |
| (800, 900) | 2/3 |
| More than 900 | 1 |

Therefore, in the present embodiment, after washing, only corresponding intervals are judged according to the detected washed water turbidity NTUa to execute the next step.

### Embodiment 4

According to the present embodiment, in a circulating water purification rinsing process, after rising to preset time, whether the rinsed water turbidity is continuously increased in a set time range is detected, if yes, water is all or partially discharged for supplying clean water for rinsing according to a change rate of the turbidity; if no, the circulating water purification continuous till the rising is ended. The partial water discharging proportion can be set according to a washing water discharging proportional relation; and above preset time relates to clothes amount and a rinsing water level.

In the washing process of the present invention, during pre-water supplying, a pre-water supplying water level needs to immerse the turbidity detector generally arranged in the water discharging hose 71; a washing set water level L2 is set by a user according to the clothes amount or determined after the washing machine automatically weighs the clothes; the interval of circular detection time is t1 in a range of 1-3min and preferably 2min; the circular total purification time t2 is different along with different ranges of a washing procedure, and preferably 30-60min; backflushing time t3 is set in a range of 5-15s and preferably 10s.

The turbidity threshold values in the embodiments of the present invention are set as follows:
the first turbidity threshold value NTU1 is set in a range of 500-600 NTU and preferably 600NTU;
the second turbidity threshold value NTU2 is set in a range of more than 900NTU, and preferably 900NTU;
the third turbidity threshold value NTU3 is set in a range of 50-120 NTU and preferably 80NTU.

The interval intervals and corresponding water discharging proportions n of the present invention are not fixed and are set according to different machine models and/or washing procedures and/or loads.

Based on the explain of the specific embodiments of the present invention, the washing machine with the circulating water purification rinsing function can be a roller washing machine or an impeller washing machine, and other specific embodiments of the present invention conceivable by those skilled in the art without creative labor will fall into a protection scope of the present invention.

## Claims

1. A washing control method for circulating water purification of a washing machine comprising a water supplying system (4), a water discharging system (7), a circulating water purification device (8) and a turbidity detector (10), wherein in a rinsing process, circulating water purification rinsing is executed by the circulating water purification device (8),, after washing is finished, turbidity of washed water is detected according to the turbidity detector (10),
and the method is **characterized in that**, after preset water discharge amount corresponding to the turbidity is selected for discharging water and the amount is discharged, the circulating water purification rinsing is executed after supplying clean water for reducing the turbidity.

2. The method according to claim 1, **characterized in that** the washing machine is provided with different washed water turbidity ranges, corresponding turbidity ranges are judged according to the detected washed water turbidities, and water discharge amounts of different proportions of total washed water are arranged corresponding to respective turbidity ranges.

3. The method according to claim 1, **characterized in that** after water discharging is finished according to the water discharge amount corresponding to the detected washed water turbidity, clean water is supplied to a set rinsing water level for reexecuting the circulating water rinsing.

4. The method according to claim 1, **characterized in that** after washing is finished, if the washed water turbidity detected by the turbidity detector (10) is smaller than a set first turbidity threshold valve, the circulating water purification device (8) is directly opened for circulating water purification; if the turbidity is larger than a set second turbidity threshold value, the washed water is totally discharged, water is supplied again for rinsing, and circulating water purification is executed; if the turbidity is in an interval between the first turbidity threshold value and the second turbidity threshold value, water of corresponding water discharge amount is discharged according to the detected washed water turbidity, rest washed water is reserved, and clean water is supplied to reduce the turbidity and then circulating water purification rinsing is executed.

5. The method according to claim 1, **characterized in that** after washing is finished, the turbidity detector (10) detects the washed water turbidity, if the turbidity is smaller than the set first turbidity threshold value, the circulating water purification device (8) is directly opened for circulating water purification; if the turbidity is larger than the set first turbidity threshold value, water of the corresponding water discharge amount is discharged according to the detected washed water turbidity, and clean water is supplied for executing the circulating water purification rinsing.

6. The method according to claim 1, **characterized in that** in a circulating water rinsing process, time is set at intervals to detect the rinsing water turbidity, if the rinsing water turbidity is smaller than a set third turbidity threshold value, the rinsing is finished, the rinsing is stopped and the circulating water purification device (8) is closed.

7. The method according to claim 1, **characterized in that** in a circulating water rinsing process, if working time of the circulating water purification device (8) reaches the set working time, the rinsing is finished, the rinsing is stopped and the circulating water purification device (8) is closed.

8. The method according to claim 1, **characterized in that** in a circulating water purification rinsing process, when rinsing to set time, whether the rinsing water turbidity is increased continuously in the set time range is detected, if yes, part or all water is discharged for clean water rinsing according to a change rate of the turbidity; and if no, circulating water purification rinsing continues till the rinsing is ended.

9. The method according to any of claims 1-8, **characterized in that** the preset water discharge amount corresponding to the washed water turbidity is set according to a proportion of washed water volume, a ratio is larger than 0 and smaller than 1, and at least one ratio exists and relates to quantity set and washing procedures.

10. A washing machine, comprising a drum and **characterized by** also comprising a circulating water purification passage and a backflushing passage; the circulating water purification passage is a circulating passage consisting of the drum, the water discharging system (7), the circulating water purification device (8) and the water supplying system (4) in sequence, and the backflushing passage consists of the water supplying system (4), the circulating water purification device (8) and the water discharging system (7);
wherein in a rinsing process, circulating water purification rinsing is executed by the circulating water purification device (8), and, after washing is finished, turbidity of washed water is detected according to a turbidity detector (10); and, after preset water discharge amount corresponding to the turbidity is selected for discharging water and the amount is discharged, the circulating water purification rinsing is executed after supplying clean water for reducing the turbidity.

## Patentansprüche

1. Waschsteuerungsverfahren zur Reinigung des zirkulierenden Wasserseiner Waschmaschine, umfassend ein Wasserzufuhrsystem (4), ein Wasserauslasssystem (7), eine Zirkulationswasserreinigungsvorrichtung (8) und einen Trübungsdetektor (10), wobei in einem Spülprozess ein Zirkulationswasserreinigungsspülen durch die Zirkulationswasserreinigungsvorrichtung (8) durchgeführt wird, nach Beendigung des Waschens eine Trübung des Waschwassers mittels des Trübungsdetektors (10) erfasst wird,
und das Verfahren **dadurch gekennzeichnet ist, dass**, nachdem eine voreingestellte, der Trübung entsprechende Wasserauslassmenge zum Auslassen von Wasser ausgewählt und die Menge ausgelassen wurde, das Zirkulationswasserreinigungsspülen nach dem Zuführen von sauberem Wasser zum Reduzieren der Trübung durchgeführt wird.

2. Verfahren nach Anspruch 1, **dadurch gekennzeichnet, dass** die Waschmaschine mit unterschiedlichen Trübungsbereichen des Waschwassers versehen ist, entsprechende Trübungsbereiche gemäß den erfassten Trübungen des Waschwassers beurteilt werden und Wasserauslassmengen mit unterschiedlichen Anteilen des gesamten Waschwassers entsprechend den jeweiligen Trübungsbereichen eingerichtet sind.

3. Verfahren nach Anspruch 1, **dadurch gekennzeichnet, dass** nach Beendigung des Wasserauslasses gemäß der Wasserauslassmenge, die der erfassten Waschwassertrübung entspricht, sauberes Wasser bis zu einem eingestellten Spülwasserstand zugeführt wird, um das Zirkulationswasserspülen erneut durchzuführen.

4. Verfahren nach Anspruch 1, **dadurch gekennzeichnet, dass** nach Beendigung des Waschvorgangs, wenn die vom Trübungsdetektor (10) erfasste Waschwassertrübung kleiner als ein eingestellter erster Trübungsschwellenwert ist, die Zirkulationswasserreinigungsvorrichtung (8) direkt zur Zirkulationswasserreinigung geöffnet wird; wenn die Trübung größer als ein eingestellter zweiter Trübungsschwellenwert ist, das Waschwasser vollständig ausgelassen wird, Wasser zum Spülen neu zugeführt wird und die Zirkulationswasserreinigung ausgeführt wird; wenn die Trübung in einem Intervall zwischen dem ersten Trübungsschwellenwert und dem zweiten Trübungsschwellenwert liegt, Wasser mit entsprechender Wasserauslassmenge gemäß der erfassten Waschwassertrübung ausgelassen wird, Restwaschwasser zurückgehalten wird und sauberes Wasser zur Verringerung der Trübung zugeführt wird und dann das Zirkulationswasserreinigungsspülen durchgeführt wird.

5. Verfahren nach Anspruch 1, **dadurch gekennzeichnet, dass** der Trübungsdetektor (10) nach Beendigung des Waschvorgangs die Trübung des Waschwassers erfasst und wenn die Trübung kleiner als der eingestellte erste Trübungsschwellenwert ist, die Zirkulationswasserreinigungsvorrichtung (8) direkt zur Zirkulationswasserreinigung geöffnet wird; wenn die Trübung größer als der eingestellte erste Trübungsschwellenwert ist, Wasser mit der entsprechenden Wasserauslassmenge gemäß der erfassten Trübung des Waschwassers ausgelassen wird und sauberes Wasser zur Durchführung des Zirkulationswasserreinigungsspülens zugeführt wird.

6. Verfahren nach Anspruch 1, **dadurch gekennzeichnet, dass** in einem Zirkulationswasserspülverfahren die Zeit auf Intervalle zum Erfassen der Spülwassertrübung eingestellt wird, und wenn die Spülwassertrübung kleiner als ein eingestellter dritter Trübungsschwellenwert ist, das Spülen beendet wird, das Spülen gestoppt wird und die Zirkulationswasserreinigungsvorrichtung (8) geschlossen wird.

7. Verfahren nach Anspruch 1, **dadurch gekennzeichnet, dass** in einem Zirkulationswasserspülverfahren, wenn die Betriebszeit der Zirkulationswasserreinigungsvorrichtung (8) die eingestellte Betriebszeit erreicht, das Spülen beendet ist, das Spülen gestoppt wird und die Zirkulationswasserreinigungsvorrichtung (8) geschlossen wird.

8. Verfahren nach Anspruch 1, **dadurch gekennzeichnet, dass** in einem Zirkulationswasserreinigungsspülvorgang, wenn bis zur eingestellten Zeit gespült wird, erfasst wird, ob sich die Trübung des Spülwassers im eingestellten Zeitbereich kontinuierlich erhöht, wenn ja, ein Teil oder das gesamte Wasser ausgelassen wird, um gemäß einer Änderungsrate der Trübung mit sauberem Wasser zu spülen; und wenn nicht, das Zirkulationswasserreinigungsspülen fortzuführen bis das Spülen beendet wird.

9. Verfahren nach einem der Ansprüche 1-8, **dadurch gekennzeichnet, dass** die der Waschwassertrübung entsprechende voreingestellte Wasserauslassmenge gemäß einem Anteil des Waschwasservolumens eingestellt wird, wobei ein Verhältnis größer als 0 und kleiner als 1 ist und zumindest ein Verhältnis existiert und sich auf die Mengeneinstellung und die Waschverfahren bezieht.

10. Waschmaschine, umfassend eine Trommel und **dadurch gekennzeichnet, dass** sie auch einen Zirkulationswasserreinigungskanal und einen Rückspülkanal umfasst; wobei der Zirkulationswasserreinigungskanal ein Zirkulationskanal ist, der aus der Trommel, dem Wasserauslasssystem (7), der Zirkulationswasserreinigungsvorrichtung (8) und dem Wasserzufuhrsystem (4) in Folge besteht, und der Rückspülkanal aus dem Wasserzufuhrsystem (4), der Zirkulationswasserreinigungsvorrichtung (8) und dem Wasserauslasssystem (7) besteht;
wobei in einem Spülvorgang eine Zirkulationswasserreinigungsspülung durch die Zirkulationswasserreinigungsvorrichtung (8) durchgeführt wird und nach Beendigung des Waschens die Trübung des Waschwassers mittels eines Trübungsdetektors (10) erfasst wird; und, nachdem eine der Trübung entsprechende voreingestellte Wasserauslassmenge zum Auslassen von Wasser ausgewählt und die Menge ausgelassen wurde, die Zirkulationswasserreinigungsspülung nach Bereitstellung von sauberem Wasser zur Reduzierung der Trübung durchgeführt wird.

## Revendications

1. Procédé de commande de purification de l'eau de circulation d'une machine à laver comprenant un système d'alimentation en eau (4), un système d'évacuation d'eau (7), un dispositif de purification d'eau de circulation (8) et un détecteur de turbidité (10), un rinçage de purification d'eau de circulation étant exécuté par le dispositif de purification d'eau de circulation (8) dans un processus de rinçage, après que le lavage est terminé,
la turbidité de l'eau de lavage étant détectée par le détecteur de turbidité (10),
et le procédé étant **caractérisé par le fait que** le rinçage de purification d'eau de circulation est exécuté après l'alimentation en eau propre pour réduire la turbidité, après que le volume d'évacuation d'eau prédéfini correspondant à la turbidité a été sélectionné pour évacuer l'eau et que le volume a été évacué.

2. Procédé selon la revendication 1, **caractérisé en ce que** la machine à laver est munie de différentes plages de turbidité d'eau de lavage, **en ce que** les plages de turbidité correspondantes sont évaluées en fonction des turbidités d'eau de lavage détectées, et **en ce que** des volumes d'évacuation d'eau de proportions différentes de l'eau de lavage totale sont agencés de façon à correspondre à des plages de turbidité respectives.

3. Procédé selon la revendication 1, **caractérisé en ce que** de l'eau propre est fournie à un niveau d'eau de rinçage défini pour réexécuter le rinçage d'eau de circulation, après que l'évacuation d'eau est terminée conformément au volume d'évacuation d'eau correspondant à la turbidité d'eau de lavage détectée.

4. Procédé selon la revendication 1, **caractérisé en ce que**, si la turbidité d'eau de lavage détectée par le détecteur de turbidité (10) est inférieure à une première valeur seuil de turbidité définie, le dispositif de purification d'eau de circulation (8) est directement ouvert pour la purification d'eau de circulation après que le lavage est terminé ; si la turbidité est supérieure à une deuxième valeur seuil de turbidité définie, l'eau de lavage est entièrement évacuée, de l'eau est fournie de nouveau pour le rinçage et la purification d'eau de circulation est effectuée ; si la turbidité se trouve dans un intervalle formé par la première valeur seuil de turbidité et la deuxième valeur seuil de turbidité, de l'eau d'un volume d'évacuation d'eau correspondant est évacuée en fonction de la turbidité d'eau de lavage détectée, de l'eau de lavage restante est réservée et de l'eau propre est fournie pour réduire la turbidité et, ensuite, un rinçage de purification d'eau de circulation est effectué.

5. Procédé selon la revendication 1, **caractérisé en ce que** le détecteur de turbidité (10) détecte la turbidité de l'eau de lavage après que le lavage est terminé, si la turbidité est inférieure à la première valeur seuil de turbidité, le dispositif de purification d'eau de circulation (8) est directement ouvert pour la purification de l'eau de circulation ; si la turbidité est supérieure à la première valeur seuil de turbidité, de l'eau du volume d'évacuation d'eau correspondant est évacuée en fonction de la turbidité de l'eau de lavage détectée, et de l'eau propre est fournie pour exécuter le rinçage de purification d'eau de circulation.

6. Procédé selon la revendication 1, **caractérisé en ce qu'**un temps est fixé à intervalles pour détecter la turbidité de l'eau de rinçage dans un processus de rinçage d'eau de circulation, si la turbidité d'eau de rinçage est inférieure à une troisième valeur seuil de turbidité définie, le rinçage est terminé, le rinçage est arrêté et le dispositif de purification d'eau de circulation (8) est fermé.

7. Procédé selon la revendication 1, **caractérisé en ce que**, dans un processus de rinçage d'eau de circulation, si le temps de fonctionnement du dispositif de purification d'eau de circulation (8) atteint le temps de fonctionnement défini, le rinçage est terminé, le rinçage est arrêté et le dispositif de purification d'eau de circulation (8) est fermé.

8. Procédé selon la revendication 1, **caractérisé en ce que**, dans un processus de rinçage de purification de l'eau de circulation, lorsque le rinçage est effectué à un temps fixé, le fait de savoir si la turbidité de l'eau de rinçage augmente continuellement dans la plage de temps fixé est déterminé, si oui, toute l'eau ou une partie de l'eau est évacuée pour un rinçage à l'eau propre en fonction d'un degré de modification de la turbidité ; et si non, le rinçage de purification de l'eau de circulation continue jusqu'à ce que le rinçage soit terminé.

9. Procédé selon l'une quelconque des revendications 1-8, **caractérisé en ce que** le volume d'évacuation d'eau prédéfini correspondant à la turbidité d'eau de lavage est fixé en fonction d'une proportion du volume d'eau de lavage, un rapport est supérieur à 0 ou inférieur à 1, et au moins un rapport existe et se rapporte au volume fixé et aux procédures de lavage.

10. Machine à laver comprenant un tambour et **caractérisé en ce qu'**elle comprend également un passage de purification d'eau de circulation et un passage de rétrolavage ; le passage de purification d'eau de circulation est un passage de circulation se composant du tambour, du système d'évacuation d'eau (7), du dispositif de purification d'eau de circulation (8) et du système d'alimentation en eau (4) en séquence, et le passage de rétrolavage se composant du système d'alimentation en eau (4), du dispositif de purification d'eau de circulation (8) et du système d'évacuation d'eau (7) ;
dans un processus de rinçage, un rinçage de purification d'eau de circulation étant exécuté par le dispositif de purification d'eau de circulation (8) et, après que le lavage est terminé,
la turbidité de l'eau de lavage étant détectée par le détecteur de turbidité (10) ; et le rinçage de purification d'eau de circulation étant exécuté après l'alimentation en eau propre pour réduire la turbidité, après que le volume d'évacuation d'eau prédéfini correspondant à la turbidité est sélectionné pour évacuer l'eau et que le volume est évacué.
